## Europäisches Patentamt

## European Patent Office

## Office européen des brevets

(19)

(11) Veröffentlichungsnummer: **0 010 084**
**B1**

(12) # EUROPÄISCHE PATENTSCHRIFT

(45) Veröffentlichungstag der Patentschrift:
**22.12.82**

(51) Int. Cl.³: **B 60 R 25/04**

(21) Anmeldenummer: **79930024.9**

(22) Anmeldetag: **01.10.79**

(54) **Elektronische Diebstahlsicherung für Kraftfahrzeuge.**

(30) Priorität: **03.10.78 LU 80321**

(43) Veröffentlichungstag der Anmeldung:
**16.04.80 Patentblatt 80/8**

(45) Bekanntmachung des Hinweises auf die Patenterteilung:
**22.12.82 Patentblatt 82/51**

(84) Benannte Vertragsstaaten:
**AT BE CH DE FR GB IT NL SE**

(56) Entgegenhaltungen:
**DE-A-2 123 309**
**FR-A-2 271 956**
**US-A-3 634 880**
**US-A-3 754 148**
**US-A-3 784 839**
**US-A-4 090 089**

(73) Patentinhaber: **Greiveldinger, Roger, 32 rue J.P. Beicht, L-Luxembourg (LU)**

(72) Erfinder: **Greiveldinger, Roger, 32 rue J.P. Beicht, L-Luxembourg (LU)**

(74) Vertreter: **Freylinger, Ernest T. et al, c/o FREYLINGER & ASSOCIES Postfach 1153 46 rue du Cimetière, L-Luxembourg (LU)**

## Elektronische Diebstahlsicherung für Kraftfahrzeuge

Die Erfindung betrifft eine elektronische Diebstahlsicherung für Kraftfahrzeuge mit wenigstens einem Schalterelement für die Unterbrechung der Stromkreise bestimmter für den Betrieb des Fahrzeuges notwendiger Bauteile, sowie einem Kombinationsgeber zum Aufheben dieser Unterbrechung bei Eingabe eines bestimmten Startkodes.

Diebstahlsicherungen dieser Art sind aus der US-A-4 090 089 und der FR-A-2 271 956 bekannt. Diese bekannten Anlagen weisen jedoch entweder den Nachteil auf, dass sie beim Verlassen des Fahrzeugs von Hand eingeschaltet werden müssen, dass also zusätzliche Handgriffe nötig sind für welche keine Gewähr gegeben ist, dass sie ausgeführt werden, das heisst, dass sie nicht vergessen werden, oder den Nachteil, dass sie bei ungewolltem Ausschalten des Motors (zum Beispiel Ersticken) die Eingabe des Startkodes verlangen.

Ein weiterer Nachteil besteht darin, dass nach Ausfindigmachen des Sicherungsschalters, die Anlagen ausser Funktion gesetzt werden können und die Sicherungsschalter leicht überbrückt werden können.

Der Erfindung liegt die Aufgabe zugrunde, eine Diebstahlsicherung der eingangs genannten Art zu schaffen, welche keine zusätzlichen Handgriffe verlangt aber Unbefugten die Ausserbetriebsetzung des Sicherungssystems wesentlich erschwert.

Zur Lösung dieser Aufgabe ist die erfindungsgemässe elektronische Diebstahlsicherung dadurch gekennzeichnet, dass das Schaltelement über einen Zeitschalter gesteuert ist, wobei die Unterbrechung automatisch, nach Abstellen des Fahrzeugmotors und nach Ablauf einer durch den Zeitschalter bestimmten Verzögerung eintritt, und dass eine Alarmanlage vorgesehen ist, welche bei Eingabe eines bestimmten Zusatzkodes in den Kombinationsgeber in Betrieb gesetzt wird.

Das Schaltelement besteht vorzugsweise aus einem Hauptrelais welches die Stromzuführung zu wichtigen Bauteilen, wie zum Beispiel Zündspule, Anlasser, elektrische Benzinpumpe, Magnetventil der Kraftstoffzuführung usw., unterbricht. Der Kombinationsgeber besteht vorzugsweise aus einem digitalen Tastenfeld in welches eine vorgewählte, durch eine Steckmatrix bestimmte Zahlenkombination einzugeben ist. Dabei kann die Zahlenkombination durch Änderung der Steckmatrix beliebig geändert werden.

Bei Inbetriebnahme des Fahrzeugs wird durch Eingabe eines Kodes, zum Beispiel der vorgewählten Zahlenkombination in das auf dem Armaturenbrett angebrachte Tastenfeld die durch das Schaltelement hervorgebrachte Unterbrechung aufgehoben. Dies geschieht dadurch, dass in einem an das Tastenfeld anschliessenden Logikteil geprüft wird, ob die eingegebene Zahlenkombination die richtige ist. Ist dies der Fall, so wird das aus dem Hauptrelais bestehende Schaltelement betätigt, welches mittels der Relaiskontakte die Verbindungen zu den abgesicherten Bauteilen wieder herstellt. Entspricht die Zahlenkombination nicht der vorgewählten Kombination, so bleibt das Hauptrelais in Verriegelungsstellung.

Um zu verhindern, dass alle Kombinationsmöglichkeiten unbemerkt durchgespielt werden können, löst eine weitere, vorzugsweise einfache Kombination eine Warnanlage aus, zum Beispiel die Hupe. Dieses Signal kann nur durch Eingabe des durch die Zahlenkombination bestimmten Startkodes gelöscht werden oder wird automatisch durch den Zeitschalter nach Ablauf einer bestimmten Zeit unterbrochen.

Der Zeitschalter gewährleistet, dass das Hauptrelais beim Abstellen des Fahrzeugmotors eine bestimmte Zeit angezogen bleibt, das heisst, dass die Unterbrechung erst nach einer bestimmten Verzögerung eintritt. Während dieser Verzögerung kann der Fahrzeugmotor mittels der Druckknopfstarteinheit oder des Zündschlosses wieder in Betrieb gesetzt werden. Diese Verzögerung oder Abfallzeit des Zeitschalters ist vorzugsweise einstellbar. Die Schaltung ist so entworfen, dass bei eingegebener richtiger Startkombination bei Stellung «Zündung» des Druckschalters oder des Zündschlosses die Abfallzeit des Zeitschalters gespeichert bleibt. Erst nach Abschalten der Zündung läuft der Zeitschalter ab. Wird während dieser Abfallzeit die Zündung wieder eingeschaltet, so läuft der Zeitschalter sofort wieder auf die volle Abfallzeit vor und das Hauptrelais bleibt angezogen. Hierdurch wird gewährleistet, dass z.B. bei Ersticken des Motors beim Anhalten an Kreuzungen wiederholt gezündet werden kann ohne jedes Mal die Startkombination eingeben zu müssen. Gleiches gilt beim Starten des kalten schlecht anspringenden Motors. Eine Abfallzeit des Zeitschalters von etwa einer Minute genügt meistens.

Es ist jedoch auch möglich eine spezielle Taste auf dem Tastenfeld vorzusehen mit welcher, nach Unterbrechung der Zündung, das Sicherungssystem sofort eingeschaltet werden kann ohne den Ablauf der Abfallzeit des Zeitschalters abzuwarten.

Die hauptsächlichsten Bestandteile der Sicherung, d.h. der Spannungsteil, der Logikteil, der Zeitschalter, das Hauptrelais, sowie der Alarmteil sind in einem Gehäuse untergebracht, welches getrennt vom Tastenfeld z.B. unter der Motorhaube befestigt ist und in welches die Anschlüsse für Zündung, Anlasser, usw. münden. Hierdurch ist eine Überbrückung des Sicherungssystems nur unter der Motorhaube möglich. Ohne Alarm auszulösen kann die Haube jedoch nur geöffnet werden, wenn die richtige Startkombination vorher eingegeben wurde, da das Hauptrelais nur in angezogenem Zustand die Kontakte zum Alarm unterbricht.

Gemäss einer bevorzugten Ausführungsform sind die Schaltungen von z.B. Scheinwerfern, Leuchten, Radio, Motorantenne derart mit dem Zeitschalter verbunden, dass diese nach Abfallzeit des Zeitschalters automatisch abgeschaltet werden, bzw. die Antenne eingefahren wird.

Die erfindungsgemässe Diebstahlsicherung erlaubt die Inbetriebsetzung des Fahrzeugmotors mittels eines Druckknopfstartteils anstatt mit Zündschlüssel. Hierdurch wird einerseits die Startfunktion vereinfacht, und anderseits verhindert, dass die Türschlüssel versehentlich im Fahrzeug eingesperrt werden. Man kann sogar das Tastenfeld ausserhalb des Fahrzeugs anbringen, wodurch sämtliche Fahrzeugschlüssel entfallen, da die Türen elektromechanisch verriegelt werden können.

Gegen unbefugtes Öffnen von z.B. der Motorhaube, des Kofferraumdeckels, des Handschuhfachs usw. und unbefugtes Entfernen von im Fahrzeug angebrachten Geräten wie Radio, Funkgerät, und Zubehör sind diese Teile einzeln mit dem Alarmteil verbunden. Bei Unterbrechung einer dieser Verbindungen wird ein Alarm ausgelöst, welcher nur durch Eingabe der richtigen Startkombination abgeschaltet werden kann.

Um die Kombinationszahl nicht jedem mitteilen zu müssen, der am Fahrzeug Reparaturen vornimmt, und da speziell bei Abklemmen der Batterie die Kombination gelöscht wird, wird nach Eingabe der Startkombination, d.h. bei angezogenem Hauptrelais letzteres von Hand verriegelt, wodurch die Anlage überbrückt ist.

Ein Ausführungsbeispiel der Erfindung ist in den Zeichnungen dargestellt und wird nachfolgend näher beschrieben. Es zeigen:

Figur 1, ein Blockschaltbild der erfindungsgemässen Diebstahlsicherung.

Figur 2, ein dem prinzipiellen Aufbau nach Figur 1 entsprechendes Schaltbild.

Figur 3, ein Schaltbild des elektronischen Logikteils entsprechend den Figuren 1 und 2 mit einer Startkombinationszahl von vier Ziffern und einer Alarmkombinationszahl von zwei Ziffern.

Figur 4, ein Schaltbild eines Druckknopfstartteils mit einem erfindungsgemässen Diebstahlsicherungssystem.

Figur 5, ein Schaltbild einer Steckmatrix zum Umstellen der Sicherungskombination auf jede gewünschte mögliche Kombination mittels Kontaktstiften.

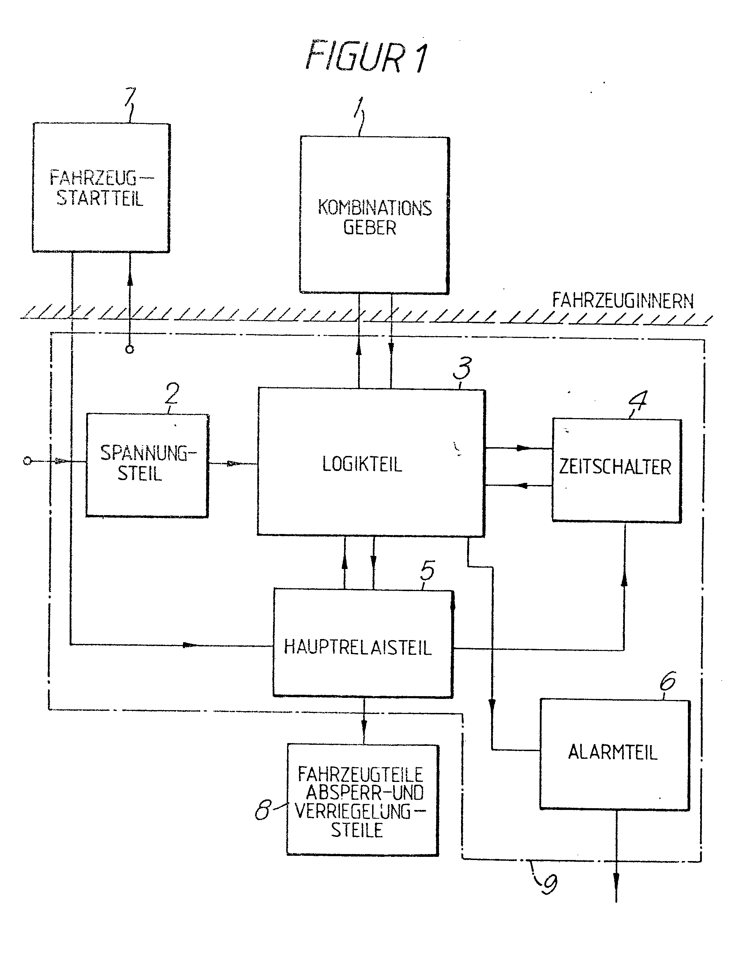

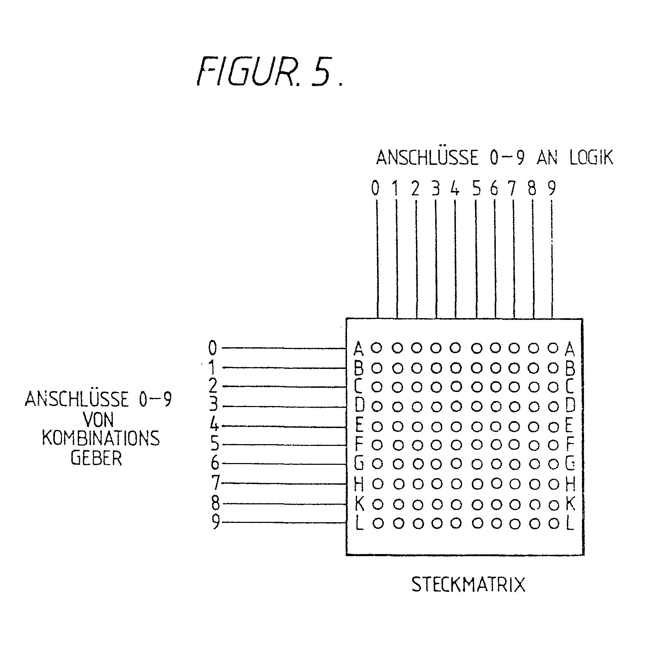

In Figur 1 ist mit 1 der aus einem digitalen Tastenfeld bestehende Kombinationsgeber bezeichnet welcher im Fahrzeuginnern, z.B. auf dem Armaturenbrett, befestigt ist und mittels Anschlusskabeln mit mehrpoliger Steckverbindung mit dem sich unter der Motorhaube befestigten, in einem Gehäuse befindlichen Sicherheitsteil 9 verbunden ist. Dieser Sicherheitsteil 9 besteht hauptsächlich aus einem Logikteil 3, einem Zeitschalter 4, einem Spannungsteil 2, einem Hauptrelaisteil 5 und einem Alarmteil 6. Die Spannungsversorgung des Sicherheitsteils erfolgt durch die Batteriespannung über den Spannungsteil 2. In der Steckverbindung zwischen Kombinationsgeber 1 und Logikteil 3 befindet sich im Sicherheitsteil 9 eine Steckmatrix welche weiter unten näher anhand von Figur 5 beschrieben wird.

Mit 7 ist der Fahrzeugstartteil bezeichnet, welcher die herkömmlichen Drucktasten oder Zündschlösser enthält womit Zündung und Anlasser unter Spannung gesetzt werden zum Starten des Fahrzeuges.

Mit 8 sind global verschiedene Fahrzeugteile angedeutet, welche durch den Hauptrelaisteil 5 abgesperrt oder verriegelt werden, insbesondere durch Unterbrechung des Stromkreises oder der Stromzuführung. Diese Unterbrechung tritt automatisch ein nach Stillsetzen des Motors durch den Fahrzeugstartteil 7 und kann lediglich wieder durch die Eingabe einer richtigen Startkombination in den Kombinationsgeber 1 aufgehoben werden. Wird hingegen eine bestimmte Alarmkombination in den Kombinationsgeber 1 eingegeben, so wird der Alarmteil 6 betätigt, z.B. durch Inbetriebsetzen der Hupe.

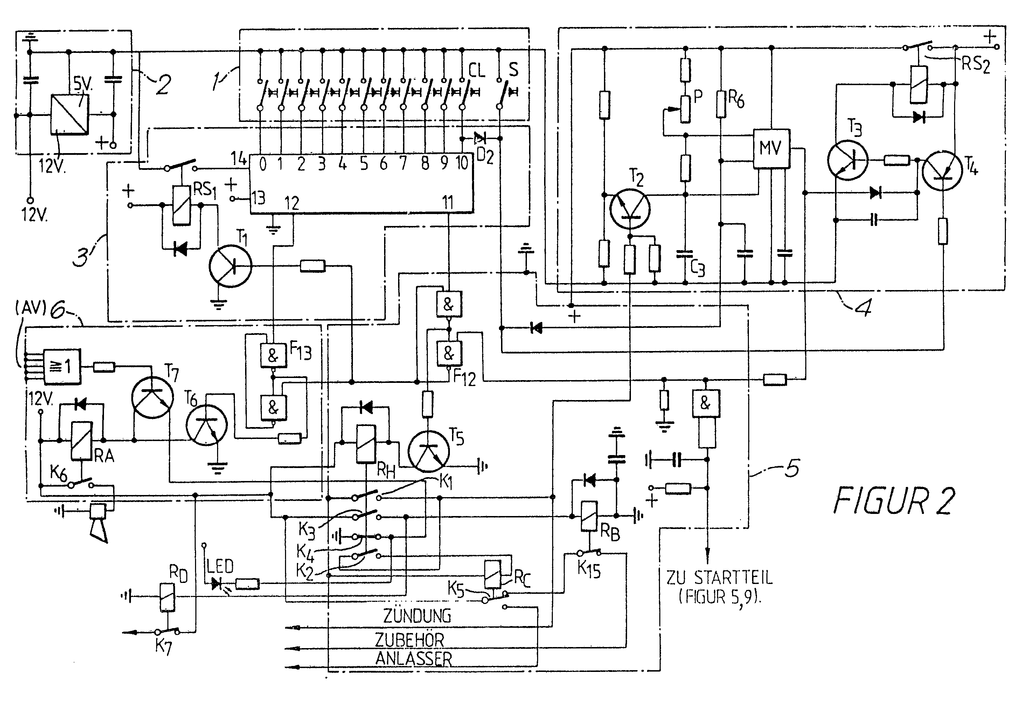

Das Blockschaltbild der Figur 1 sowie dessen Wirkungsweise wird jetzt näher anhand von Figur 2 beschrieben. Im gezeigten Aufführungsbeispiel enthält das Tastenfeld 1 die Tasten mit den Ziffern 0 bis 9, eine Starttaste S, sowie eine Löschtaste CL. Die Spannungsversorgung des Kombinationsgebers 1 erfolgt über Spannungsteil 2 in welchem die Batteriespannung von 12 Volt auf die gewünschte Spannung herabgesetzt wird. Bei Betätigung der Starttaste S wird der Zeitschalter 4 über Transistore $T_3$, $T_4$ sowie Relais $R_{S2}$ unter Spannung gesetzt. Die Abfallzeit dieses Zeitschalters 4 ist von der Kippdauer eines Multivibrators MV abhängig welche ihrerseits von einem Potentiometer P und Kondensator $C_3$ einerseits und anderseits von der Basisspannung eines Transistors $T_2$ gesteuer wird. Durch die Bedienung der Starttaste S erhalten auch die Gatter des Hauptrelaisteils 5 Spannung durch welche Transistor $T_1$ des Logikteils 3 auf Durchlass geschaltet wird und dadurch über Relais $R_{S1}$ Spannung auf die Logik gegeben wird.

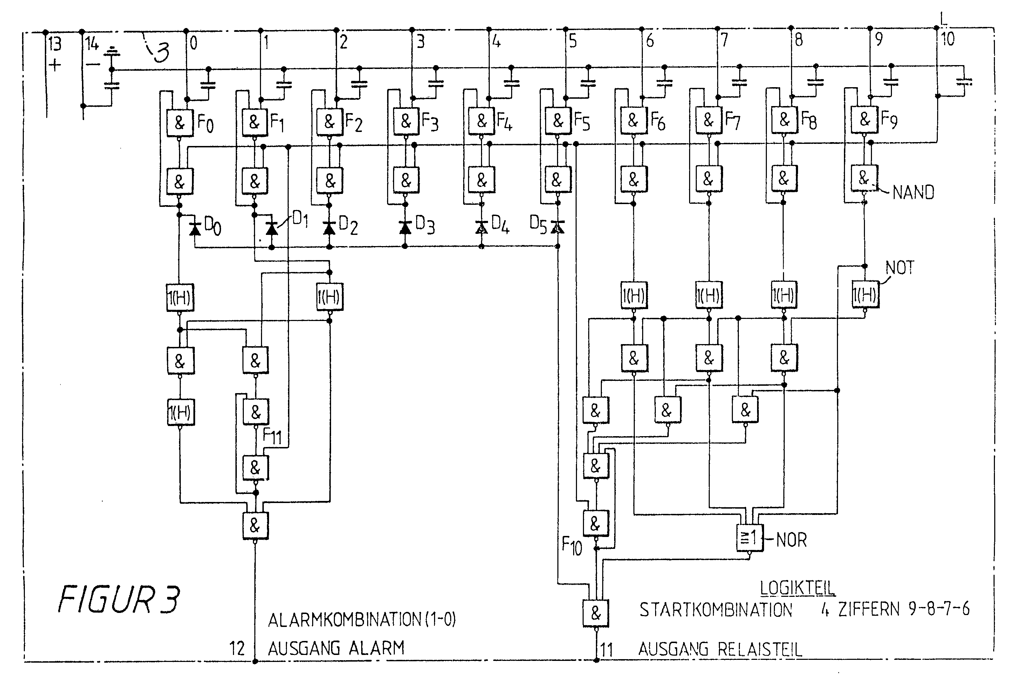

Wie aus Figur 3 hervorgeht, besteht der Logikteil hauptsächlich aus zehn Flip-Flop Schaltungen $F_0$ bis $F_9$, welche jeweils aus zwei kreuzgekoppelten NAND-Gatter mit zwei stabilen Arbeitspunkten bestehen. Angenommen die Schaltung sei auf die Startkombination bestehend aus vier Ziffern 9-8-7-6 eingestellt, dann wird bei Eingabe dieser Startkombination in der richtigen Reihenfolge in das Tastenfeld 1 Transistor $T_5$ über die Flip-Flop-Schaltung $F_{12}$ auf Durchlass geschaltet, wodurch das Hauptrelais $R_H$ anzieht. Gleichzeitig wird Transistor $T_1$ gesperrt und Relais $R_{S1}$ fällt ab, wodurch das Logikteil 3 spannungslos wird. Relais $R_H$ bleibt jedoch durch die Selbsthaltung von Flip-Flop-Schaltung $F_{12}$ bis zur Kippung des Zeitschalters 4 angezogen. Der Zeitpunkt dieser Kippung ist von der Abfallzeit abhängig und kann, wie oben erklärt, über den Potentiometer P eingestellt werden. Für normalen Betrieb genügt eine Abfallzeit von etwa einer Minute um den Motor z.B. unter schlechten Bedingungen wiederholt starten zu können. Wird während dieser Abfallzeit des Zeitschalters 4 der Motor gestartet, d.h. Startteil 7 gezündet, so wird Transistor $T_2$ angesteuert wodurch der Zeitschalter 4 nicht mehr umkippt und dass Hauptralais $R_H$ demgemäss angezogen bleibt. Diese Lage verändert sich nicht bis der Motor abgestellt wird, z.B. durch Unterbrechung am Startteil 7. Dann wird nämlich die Basisspannung von Transistor $T_2$ unterbrochen, sodass die Abfallzeit des Zeitschalters 4 zu laufen beginnt und das Relais $R_H$ nach dieser Abfallzeit durch Umschaltung der Flip-Flop Schaltung $F_{12}$ abfällt und die Diebstahlsicherung einschaltet.

Um zu verhindern, dass Unbefugte die verschiedenen Kombinationsmöglichkeiten unbemerkt durchspielen können um auf diese Weise die richtige Startkombination herauszufinden, ist in der Schaltung eine Alarmkombination gespeichert. Diese besteht vorzugsweise aus einer einfachen Kombination von Ziffern, sodass bei einem solchen unbefugten Versuch auch diese Kombination eingegeben werden muss. Im gezeigten Ausführungsbeispiel der Figur 3 ist die Alarmkombination 1–0. Wird also nach Drücken der Taste S anstatt der Startkombination die Kombination 1–0 eingegeben, so wird Transistor $T_6$ über eine Flip-Flop Schaltung $F_{13}$ auf Durchlass geschaltet. Hierdurch wird ein Relais $R_A$ angezogen welches einen Kontakt $K_6$ schliesst und die Autohupe unter Spannung setzt. Das Alarmsignal wird erst unterbrochen, wenn anschliessend die richtige Startkombination eingegeben wird oder wenn das Relais $R_H$ nach der Abfallzeit des Zeitschalters 4 durch Umschaltung der Flip-Flops $F_{11}$ und $F_{12}$ abfällt.

Die Schaltung des Logikteils gemäss Figur 3 erlaubt die vierstellige Startkombination nur in der Reihenfolge 9–8–7–6, mit Logikpegel L (low) am Ausgang 11 zur Relaisschaltung 5. Im Ausgangszustand, d.h. bei Unbeschaltung der Eingänge 0 bis 10 liegt an den beiden Ausgängen 11 und 12 Logikpegel H (high). Werden die Eingänge durch das Tastenfeld in der Reihenfolge 9–8–7–6 mit Logikpegel L beaufschlagt, so erscheint Logikpegel L an den Ausgängen der Flip-Flop Schaltungen in der Reihenfolge $F_9$–$F_8$–$F_7$–$F_6$.

Da die Flip-Flop Schaltungen zwei stabile Arbeitspunkte besitzen bleibt das Signal L am Ausgang 11 erhalten. Erst durch Anlegen von Pegel L auf den Eingang 10 kippen die Flip-Flops in die Ausgangslage zurück. Jede nicht unmittelbar und in der richtigen Reihenfolge der Kombination, oder nicht zu dieser zugehörigen eingegebene Ziffer blockiert sofort den Ausgang 11. Dieser Ausgang bleibt so lange gesperrt bis die Schaltung durch die Löschtaste CL am Eingang 10 in die Ausgangslage zurückgeführt wird.

Die Arbeitsweise der Alarmschaltung des Logikteils 3 erfolgt in ähnlicher Weise. Wird an den Eingängen 0 bis 9 die Kombination 1–0 in diese Reihenfolge eingegeben, d.h. werden die Eingänge 1 und 0 mit Pegel L beaufschlagt, dann erfolgt am Ausgang 12 Logikpegel L, welcher durch Flip-Flop $F_{11}$ erhalten bleibt und lediglich durch Pegel L am Eingang 10 auf Pegel H zurückgeführt werden kann. Anstatt aus einer Kombination von z.B. zwei Ziffern wie 1–0 zu bestehen, kann das Alarmsignal auch lediglich aus einer Ziffer bestehen, sodass die Wahrscheinlichkeit dass das Alarmsignal bei unbefugtem Betrieb ausgelöst wird vergrössert wird.

Die in der Schaltung des Logikteils 3 vorgesehenen Dioden $D_0$ bis $D_5$ verhindern die gegenseitige Beeinflussung der Flip-Flop Schaltungen $F_0$ bis $F_5$.

Durch Erweiterung der Stufenschaltung des Logikteils 3 kann die Startkombination beliebig von vier bis auf acht Ziffern erweitert werden. Desgleichen kann sie auf eine kleinere Zahl vereinfacht werden.

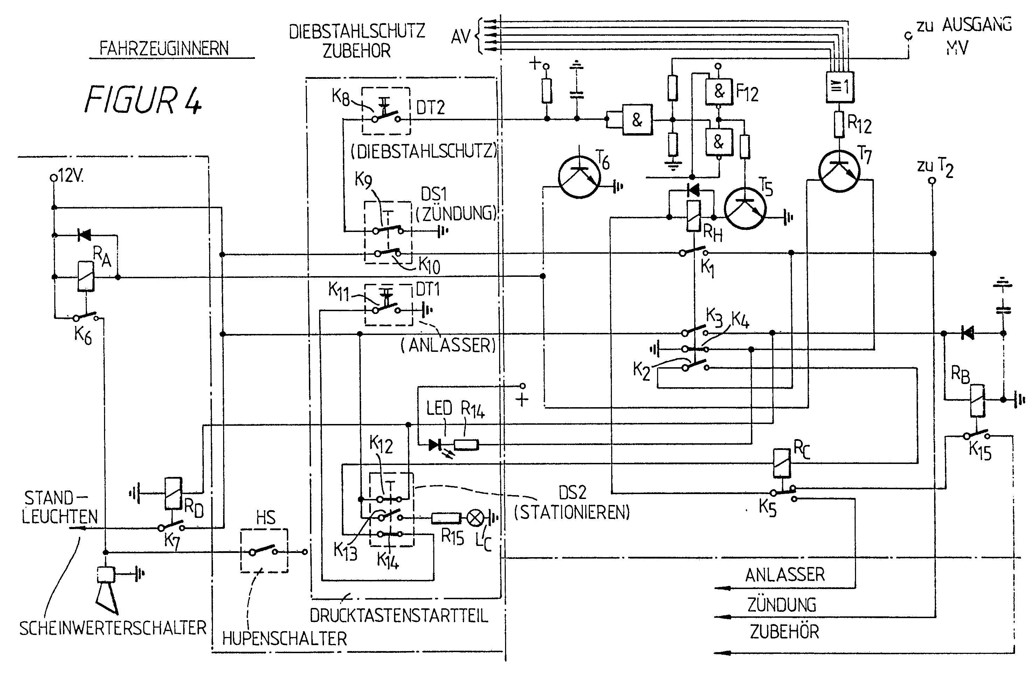

Nachfolgend wird jetzt die Diebstahlsicherung im Zusammenhang mit dem Fahrzeugstartteil 7 in Bezug auf Figur 4 beschrieben. Dieser Startteil 7 besteht aus dem Druckschalter $DS_1$ für «Zündung», $DS_2$ für «Stationierung», sowie den Drucktasten $DT_1$ für «Anlasser» und $DT_2$ für «Diebstahlschutz».

Nach Eingabe der richtigen Startkombination zieht das Hauptrelais $R_H$ an, wobei die Kontakte $K_1$, $K_2$, $K_3$ geschlossen und Kontakt $K_4$ geöffnet wird. Durch Betätigung des Druckschalters $DS_1$ werden über Kontakt $K_{10}$ die Verbindungen zum Zeitschalter 4, der Zündspule und Anlasserrelais $R_C$ hergestellt. Bei Betätigung der Drucktaste $DT_1$ wird über Kontakt $K_{11}$ und Kontakt $K_{14}$ das Relais $R_C$ und dadurch über Kontakt $K_5$ der Anlasser betätigt, bei gleichzeitigem Unterbrechen der Zubehöranschlüsse (Radio, Wischer usw.) Nach Loslassen der Drucktaste $DT_1$ wird die Verbindung zu Kontakt $K_{15}$ eines Zubehörrelais $R_B$ wiederhergestellt und die Verbindung zum Anlasser unterbrochen.

Wenn der Druckschalter $DS_1$ in die Ausgangslage zurückgebracht wird, wird die Zündung unterbrochen und der Motor stillgesetzt. Das Hauptrelais $R_H$ fällt jedoch erst nach der eingestellten Abfallzeit des Zeitschalters 4, z.B. nach einer Minute ab, so dass innerhalb dieser Zeit wiederholt gestartet werden kann.

Die Drucktaste $DT_2$ bewirkt durch Kippen des Flip-Flop 12 den sofortigen Abfall des Hauptrelais $R_H$ und somit die sofortige Inbetriebsetzung des Sicherungssystems, welches durch das rote Aufleuchten einer Diode LED angezeigt wird. Die Taste DT2 ist nur dann wirksam, wenn durch den Druckschalter DS1 die Zündung unterbrochen ist, da nur in diesem Zustand Kontakt $K_9$ geschlossen ist. Wenn die Taste DT2 gedürckt ist kann das Sicherungssystem nur durch erneute Eingabe der Startkombination ausser Funktion gesetzt und der Motor in Betrieb gesetzt werden.

Im angezogenen Zustand der Hauptrelais $R_H$ sind die Relais $R_B$ für «Zubehör» und $R_D$ für «Standleuchten und Scheinwerfer» angezogen und die Verbindung über die Kontakte $K_7$ und $K_{15}$ zu den Schaltern der betroffenen Geräte hergestellt. Nach Stillsetzen des Motors über Druckschalter DS1 fällt nach Ablauf des Zeitschalters 4 das Hauptrelais $R_H$, das Zubehörrelais $R_B$ und das Leuchtenrelais $R_D$ ab. Hierdurch wird ermöglicht, dass die Scheinwerfer, Standleuchten, Zubehörgeräte automatisch ausser Funktion gesetzt werden. Durch die Abfallverzögerung des Zeitschalters wird ausserdem gewährleistet, dass beim Abstellen des Fahrzeuges in Garagen bei Dunkelheit ausreichend lange Licht zur Orientierung vorhanden ist.

Durch Betätigen des Druckschalters DS2 «Stationieren» wird Kontakt $K_3$ des Hauptrelais $R_H$ überbrückt, so dass die Relais $R_B$ und $R_D$ anziehen und die Standleuchten, Scheinwerfer und Zubehör beliebig lange eingeschaltet werden können. Diese Überbrückung von $K_3$ wird durch eine Kontrolllampe LC angezeigt. Bei betätigtem Schalter DS2 wird über Kontakt $K_{14}$ die Verbindung zum Anlasserrelais unterbrochen. Hierdurch wird sichergestellt, dass beim Anlassen die erwähnten Geräte durch Druckschalter DS2 wieder auf Zeitbetrieb geschaltet werden müssen, wobei die Kontrollleuchte LC wieder erlischt. Im abgefallenen Zustand des Hauptrelais $R_H$ ist der mit der Masse verbundene Kontakt $K_4$ geschlossen und die Verbindung zum Emitter des Transistors $T_7$ hergestellt. Der Kollektor von Transistor $T_7$ ist parallel mit dem Transistor $T_6$ mit dem Alarmrelais $R_A$ verbunden.

Eine Anzahl Eingänge AV sind einerseits mit der Masse der gegen Diebstahl abzusichernden Zubehörgeräte und anderseits mit einem OR-Gatter verbunden. Wird irgendein Eingang unterbrochen, dann wird Transistor $T_7$ leitend und Relais $R_A$ zieht an, wobei die angeschlossene Alarmanlage betätigt wird. Durch Eingabe der Startkombination, zieht Relais $R_H$ an, wodurch, über Kontakt $K_4$, die Alarmanlage ausser Betrieb gesetzt wird.

Figur 5 zeigt eine Steckmatrix zur Bestimmung der Startkombination. In der gezeigten Aufführung sind die Vertikalreihen mit den Anschlüssen 0 bis 9 des Logikteils verbunden. Die Horizontalanschlüsse A bis L sind jeweils mit den Tasten 0 bis 9 des Tastenfeldes 1 verbunden. Die Verbindung dieser rechtwinkligen Schienen erfolgt über einsteckbare Stifte.

Gemäss der Logikschaltung von Figur 3 ist die Reihenfolge der Startkombination 9–8–7–6 und die der Alarmkombination 1–0. Wenn es wünschenswert ist, dass die Zahlenkombination auf dem Tastenfeld 1 in der Reihenfolge 1–9–7–8 für die Startkombination und in der Reihenfolge 2–6 für die Alarmkombination geändert werden soll, so sind auf der Steckmatrix von Figur 5 mit den Stiften B9, L8, H7, K6, bzw. C1, G0 die Verbindungen herzustellen.

Die erfindungsgemässe Diebstahlsicherung soll vorzugsweise ausser Betrieb gesetzt werden können um nicht jedem, welcher am Fahrzeug Reparaturen vornehmen muss, die Kombinationszahl mitteilen zu müssen. Dies kann z.B. dadurch geschehen, dass das Hauptrelais durch mechanische Verriegelung oder elektrische Unterbrechung des Stromkreises im angezogenen Zustand, d.h. nach Eingabe der Startkombination, ausser Betrieb gesetzt wird.

Es ist auch möglich, dass anstatt mit dem Tastenfeld, die Startkombination sowohl beim Kombinationsgeber als auch auf dem Sicherheitsteil mit einem kodierten Stecker oder einer kodierten Steckkarte eingegeben wird. Hierdurch ist das Sicherungssystem auch bei defektem Tastenfeld oder unterbrochener Verbindungsleitung zu dieser, funktionsfähig.

Die erfindungsgemässe Diebstahlsicherung kann wahlweise auf die verschiedensten zum Betrieb des Fahrzeugs notwendigen Bauteile, wie z.B. Verriegelung des Lenkrades, des Radantriebs, der Bremsen usw. wirken.

Obschon der Logikteil 3 der Diebstahlsicherung beispielsweise anhand einer aus NAND- und NOT-Gattern bestehenden Schaltung beschrieben wurde, ist es möglich, eine andere Schaltung vorzusehen, welche die gleichen Zwecke erfüllt. Der gesamte Logikteil kann sogar durch einen CPU-Mikroprozessor ersetzt werden.

Schliesslich sei noch hervorzuheben, dass die erfindungsgemässe Diebstahlsicherung nachträglich in alle Fahrzeuge eingebaut werden kann.

**Patentansprüche**

1. Elektronische Diebstahlsicherung für Kraftfahrzeuge mit wenigstens einem Schaltelement (5) für die Unterbrechung der Stromkreise bestimmter für den Betrieb des Fahrzeugs notwendiger Bauteile, sowie einem Kombinationsgeber (1) zum Aufheben dieser Unterbrechung bei Eingabe eines bestimmten Startkodes, dadurch gekennzeichnet, dass das Schaltelement (5) über einen Zeitschalter (4) gesteuert ist, wobei die Unterbrechung automatisch, nach Abstellen des Fahrzeugmotors und nach Ablauf einer durch den Zeitschalter (4) bestimmten Verzögerung eintritt, und dass eine Alarmanlage (6) vorgesehen ist, welche bei Eingabe eines bestimmten Zusatzkodes in den Kombinationsgeber (1) in Betrieb gesetzt wird.

2. Elektronische Diebstahlsicherung nach Anspruch 1, dadurch gekennzeichnet, dass der Kombinationsgeber (1) ein digitales Tastenfeld aufweist und dass der Startkode und der Zusatzkode aus einer bestimmten Zahlenkombination bestehen.

3. Elektronische Diebstahlsicherung nach Anspruch 1, dadurch gekennzeichnet, dass der Kombinationsgeber (1) aus einem Steckkartenleser besteht.

4. Elektronische Diebstahlsicherung nach einem der Ansprüche 1 bis 3, dadurch gekennzeichnet, dass der Kombinationsgeber (1) am Armaturenbrett des Fahrzeuges vorgesehen ist.

5. Elektronische Diebstahlsicherung nach einem der Ansprüche 1 bis 3, dadurch gekennzeichnet, dass der Kombinationsgeber (1) an der Aussenseite des Fahrzeuges vorgesehen ist.

6. Elektronische Diebstahlsicherung nach einem der Ansprüche 1 bis 5, dadurch gekennzeichnet, dass der Zeitschalter (4), das Schaltelement (5) und die Alarmanlage (6) zusammen mit einem den beim Kombinationsgeber (1) eingegebenen Kode auf Richtigkeit prüfenden Logikteil (3) in einem Gehäuse unter der Motorhaube des Fahrzeuges angebracht sind.

7. Elektronische Diebstahlsicherung nach Anspruch 6, dadurch gekennzeichnet, dass der Kombinationsgeber (1) mit den zusammen in dem Gehäuse untergebrachten Teilen über eine mit einer Steckmatrix (Figur 5) versehenen Steckverbindung verbunden ist und dass der am Kombinationsgeber (1) einzugebende Kode mittels dieser Steckmatrix beliebig verändert werden kann.

8. Elektronische Diebstahlsicherung nach Anspruch 1, dadurch gekennzeichnet, dass die Verzögerung durch die Zeitkonstante des Zeitschalters (4) bestimmt ist und dass diese Zeitkonstante mittels Potentiometer einstellbar ist.

9. Elektronische Diebstahlsicherung nach Anspruch 8, dadurch gekennzeichnet, dass der Zeitschalter (4) derart mit der Startvorrichtung des Fahrzeugmotors verbunden ist, dass, falls der Motor während dem Ablauf der Zeitkonstante des Zeitschalters (4) gezündet wird, dieser wieder auf die volle Ablaufzeit hochgezogen wird und unverändert in dieser Stellung bleibt, bis der Motor abgestellt wird.

10. Elektronische Diebstahlsicherung nach Anspruch 1 oder 9, dadurch gekennzeichnet, dass die Scheinwerfer, die Standleuchten und das Radio über das Schaltelement (5) und zusätzliche Schalter ($R_D$), ($R_B$) gekoppelt sind, so dass diese Elemente automatisch nach Stillsetzen des Motors und nach Ablauf der Zeitkonstante des Zeitschalters (4) ausgeschaltet werden.

11. Elektronische Diebstahlsicherung nach Anspruch 10, gekennzeichnet durch einen mit einer Kontrollampe versehenen Schalter (DS2), um die Wirkung des Schaltelementes (5) auf die zusätzlichen Schalter ($R_D$), ($R_B$) auszuschliessen.

12. Elektronische Diebstahlsicherung nach Anspruch 1, gekennzeichnet durch eine Vorrichtung, um das Schaltelement (5) nach eingegebenem richtigem Startkode ausser Betrieb zu setzen.

13. Elektronische Diebstahlsicherung nach einem der Ansprüche 9 bis 12, gekennzeichnet durch einen Schalter (DT2), der die Unterbrechung des Stromkreises nach Abstellen des Fahrzeugmotors vor der durch den Zeitschalter (4) bestimmten Verzögerung ermöglicht.

14. Elektronische Diebstahlsicherung nach Anspruch 1, dadurch gekennzeichnet, dass die Motorhaube, der Kofferraumdeckel, das Handschuhfach des Fahrzeuges und gegebenenfalls das Radio separat mit der Alarmanlage verbunden sind.

## Claims

1. Electronic anti-theft device for motor vehicles, with at least one switch element (5) serving to break the current circuit of certain components essential to the operation of the vehicle, as well as a combination transmitter (1) serving to nullify the said interruption of the circuit when a certain starting code is fed in, characterized in that the switching element (5) is controlled by a time switch (4) wherein the aforementioned interruption of current is effected automatically after the car engine has been switched off and after the expiry of a certain delay period determined by the said time switch (4), and wherein an alarm device (6) is provided which is set in operation when a certain additional code is fed into the combination transmitter (1).

2. Electronic anti-theft device in accordance with claim 1, characterized by the fact that the combination transmitter (1) has a digital keyboard and that the starting code and the additional code consist of a certain combination of digits.

3. Electronic anti-theft device in accordance with claim 1, characterized by the fact that the combination transmitter (1) consists of a plug cardreader.

4. Electronic anti-theft device in accordance with one of the claims 1–3, characterized by the fact that the combination transmitter (1) is provided on the dashboard of the vehicle.

5. Electronic anti-theft device in accordance with one of the claims 1–3, characterized by the fact that the combination transmitter is provided on the outside of the vehicle.

6. Electronic anti-theft device in accordance with one of the claims 1–5, characterized by the fact that the time switch (4), the switching element (5) and the alarm unit (6), together with a logic part (3) which tests the correctness of the code fed in, in the case of the combination transmitter (1), are mounted in a housing underneath the engine bonnet.

7. Electronic anti-theft device in accordance with claim 6, characterized by the fact that the combination transmitter (1) is connected, via a plug connection provided in a pin matrix (Fig. 5), to the parts mounted together in a housing, and that the code to be fed in, in the case of the combination transmitter (1), can be altered as desired, by means of the said pin matrix.

8. Electronic anti-theft device in accordance with claim 1, characterized by the fact that the retardation is determined by the time constant of the time switch (4) and that the said time constant is adjustable by means of a potentiometer.

9. Electronic anti-theft device in accordance with claim 8, characterized by the fact that the time switch 4 is connected to the starting device of the car engine in such a way that if the engine undergoes ignition during the course of the time constant of the time switch (4) the latter will be once again wound up to the full run-off time and will remain in this position unaltered until the engine if shut off.

10. Electronic anti-theft device in accordance with claim 1 or 9, characterized by the fact that the headlamps, the parking lights and the radio are coupled via the switching element (5) and additional switches $R_D$, $R_B$, so that these elements are switched off automatically after the engine has been shut off and after the expiry of the time constant of the time switch (4).

11. Electronic anti-theft device in accordance with claim 10, characterized by a switch $DS_2$, provided with a pilot light, serving to prevent the switching element 5 from acting on the additional switches $R_D$, $R_B$.

12. Electronic anti-theft device in accordance with claim 1, characterized by a device serving to put the switching element 5 out of operation after the correct starting code has been fed in.

13. Electronic anti-theft device in accordance with one of the claims 9–12, characterized by a switch DT$_2$, enabling the breaking of the current circuit after the car engine has been switched off but before the expiry of delay period determined by the time switch (4).

14. Electronic anti-theft device in accordance with claim 1, characterized by the fact that the engine bonnet, the cover of the boot and the glove compartment of the vehicle and possibly the radio are connected separately to the alarm unit.

**Revendications**

1. Sécurité antivol électronique pour véhicules automobiles, comportant au moins un élément de commande (5) de la coupure des circuits électriques de composants déterminés nécessaires pour le fonctionnement du véhicule, ainsi qu'un générateur de combinaison (1) pour supprimer cette coupure lors de l'introduction d'un code de démarrage déterminé, caractérisée en ce que l'élément de commande (5) est commandé par l'intermédiaire d'une minuterie (4), la coupure se produisant automatiquement après arrêt du véhicule et au bout d'une période de retard déterminée par la minuterie (4), et en ce qu'il est prévu une installation d'alarme (6) qui est enclenchée lors de l'introduction d'un code additionnel déterminé dans le générateur de combinaison (1).

2. Sécurité antivol électronique selon la revendication 1, caractérisé en ce que le générateur de combinaison (1) comporte un clavier à touches numériques et en ce que le code de démarrage et le code additionnel se composent d'une combinaison de chiffres déterminée.

3. Sécurité antivol électronique selon la revendication 1, caractérisée en ce que le générateur de combinaison (1) se compose d'un lecteur de carte enfichable.

4. Sécurité antivol électronique selon l'une des revendications 1 à 3, caractérisée en ce que le générateur de combinaison est prévu sur le tableau de bord du véhicule.

5. Sécurité antivol électronique selon l'une des revendications 1 à 3, caractérisée en ce que le générateur de combinaison (1) est prévu sur le côté extérieur du véhicule.

6. Sécurité antivol électronique selon l'une des revendications 1 à 5, caractérisée en ce que la minuterie (4), l'élément de commande (5) et l'installation d'alarme (6) sont disposés, en association avec une partie logique (3) contrôlant la validité d'un code introduit dans le générateur de combinaison (1), dans un boîtier en-dessous du capot de moteur du véhicule.

7. Sécurité antivol électronique selon la revendication 6, caractérisée en ce que le générateur de combinaison (1) est relié aux parties logées ensemble dans le boîtier par l'intermédiaire d'une liaison enfichable pourvue d'une matrice de fiches (Figure 5) et en ce que le code à introduire dans le générateur de combinaison (1) peut être modifié à l'aide de cette matrice de fiches.

8. Sécurité antivol électronique selon la revendication 1, caractérisée en ce que la période de retardement est déterminée par la constante de temps de la minuterie (4) et en ce que cette constante de temps est réglable à l'aide d'un potentiomètre.

9. Sécurité antivol électronique selon la revendication 8, caractérisée en ce que la minuterie (4) est reliée au dispositif de démarrage du véhicule de telle sorte que, au cas où le moteur est mis en marche pendant l'écoulement de la constante de temps de la minuterie (4), celle-ci soit à nouveau commutée sur la pleine période de retardement et reste sans changement dans cette condition jusqu'à ce que le moteur soit arrêté.

10. Sécurité antivol électronique selon l'une des revendications 1 ou 9, caractérisée en ce que les phares, les feux de position et la radio sont couplés par l'intermédiaire de l'élément de commande (5) et de contacteurs additionnels (R$_D$), (R$_B$) de telle sorte que ces éléments soient automatiquement désexcités après arrêt du moteur et au bout de la constante de temps de la minuterie (4).

11. Sécurité antivol électronique selon la revendication 10, caractérisée en ce qu'il est prévu un contacteur (DS$_2$) pourvu d'une lampe-témoin pour interdire l'action de l'élément de commande (5) sur les contacteurs additionnels (R$_D$), (R$_B$).

12. Sécurité antivol électronique selon la revendication 1, caractérisée en ce qu'il est prévu un dispositif pour mettre hors service l'élément de commande (5) après introduction d'un code de démarrage correct.

13. Sécurité antivol électronique selon l'une des revendications 9 à 12, caractérisée en ce qu'il est prévu un contacteur (DT$_2$) qui permet la coupure du circuit après arrêt du moteur avant le retard déterminé par la minuterie (4).

14. Sécurité antivol électronique selon la revendication 1, caractérisée en ce que le capot de moteur, le capot de coffre à bagages, la boîte à gants du véhicule et le cas échéant la radio sont reliés séparément à l'installation d'alarme.

# FIGUR 1

FIGUR 2

ZU STARTTEIL (FIGUR 5,9).

ZÜNDUNG
ZUBEHÖR
ANLASSER

FIGUR 3

ALARMKOMBINATION (1-0)

12 AUSGANG ALARM

LOGIKTEIL

STARTKOMBINATION 4 ZIFFERN 9-8-7-6

11 AUSGANG RELAISTEIL

NAND

NOT

NOR

FIGUR 4

# FIGUR. 5.

ANSCHLÜSSE 0-9 AN LOGIK

0 1 2 3 4 5 6 7 8 9

ANSCHLÜSSE 0-9
VON
KOMBINATIONS
GEBER

0
1
2
3
4
5
6
7
8
9

A ○ ○ ○ ○ ○ ○ ○ ○ ○ ○ A
B ○ ○ ○ ○ ○ ○ ○ ○ ○ ○ B
C ○ ○ ○ ○ ○ ○ ○ ○ ○ ○ C
D ○ ○ ○ ○ ○ ○ ○ ○ ○ ○ D
E ○ ○ ○ ○ ○ ○ ○ ○ ○ ○ E
F ○ ○ ○ ○ ○ ○ ○ ○ ○ ○ F
G ○ ○ ○ ○ ○ ○ ○ ○ ○ ○ G
H ○ ○ ○ ○ ○ ○ ○ ○ ○ ○ H
K ○ ○ ○ ○ ○ ○ ○ ○ ○ ○ K
L ○ ○ ○ ○ ○ ○ ○ ○ ○ ○ L

STECKMATRIX